# FASCICULE DE BREVET EUROPEEN

(11) **EP 3 386 690 B1**
(45) Date de publication et mention de la délivrance du brevet: **05.02.2020**
(21) Numéro de dépôt: 16815897.0
(22) Date de dépôt: 07.12.2016
(51) Int. Cl.: B26D 5/00, B24C 1/04, B26F 3/00, B26D 7/24, B23Q 17/22, B23Q 17/24

(54) **MÉTHODE DE CONTRÔLE DE LA FABRICATION DE PIÈCES EN MATÉRIAUX COMPOSITES ET DISPOSITIF POUR SA MISE EN OEUVRE**
VERFAHREN ZUR STEUERUNG DER HERSTELLUNG VON VERBUNDWERKSTOFFTEILEN UND VORRICHTUNG ZUR DURCHFÜHRUNG DES VERFAHRENS
METHOD FOR CONTROLLING THE MANUFACTURE OF COMPOSITE MATERIAL PARTS AND DEVICE FOR IMPLEMENTING SAME

(30) Priorité: 08.12.2015 FR 1561991
(43) Date de publication de la demande: 17.10.2018
(73) Titulaire: Airbus Group SAS, 31700 Blagnac (FR)
(72) Inventeur: CAMPAGNE, Benjamin, 44800 Saint Herblain (FR); LE MOAL, Gwénolé, 44000 Nantes (FR)
(74) Mandataire: Sarraméa, Claude
(86) Numéro de dépôt international: PCT/FR2016/053256
(87) Numéro de publication internationale: WO 2017/098151

(56) Documents cités:
- FR-A1- 2 841 010
- FR-A1- 2 925 377

## Description

### DOMAINE DE L'INVENTION

La présente invention concerne le domaine de la fabrication de pièces notamment en matériaux composites. L'invention s'intéresse plus particulièrement aux phases de découpage des pièces pour leur donner leurs contours définitifs. Elle s'applique à la mesure et au contrôle du profil de surface du trait de coupe lors du découpage de façon à réduire le nombre de pièces défectueuses.

### ÉTAT DE LA TECHNIQUE

Le découpage de pièces de formes plus ou moins complexes peut être effectué par différentes techniques selon notamment la nature du matériau constituant la pièce. Il peut s'agir de système de scie mécanique par exemple lorsqu'il est question de pièces en bois, du découpage plasma, au laser ou par électro-érosion pour des pièces métalliques ou au jet d'eau additionnée ou non d'abrasifs si la pièce est en matériau composite.

La difficulté de ces techniques réside dans la qualité des pièces produites, notamment en ce qui concerne le respect de la forme de leurs contours qui sont affectés d'ondulations non maîtrisées du trait de coupe. Pour qu'une pièce ainsi découpée ou détourée soit acceptable, le niveau d'ondulation du trait de coupe doit répondre à des critères de tolérance bien précis selon les applications ultérieures de la pièce. Ainsi, la tolérance dans l'aéronautique peut être très réduite lorsqu'il s'agit d'agencer des pièces constituant le fuselage ou les ailes d'avions. Cependant, on observe parfois des déviations significatives, au-delà des tolérances, tant le phénomène d'ondulation est complexe et peu prédictible. En outre, il n'existe pas de moyen permettant de détecter ces ondulations lorsqu'elles se produisent et le découpage est généralement poursuivi avant que le problème ne soit détecté. Ce n'est que lors du contrôle de la pièce découpée, si l'amplitude des ondulations a excédé les tolérances, que la pièce est déclarée défectueuse.

Généralement, le niveau d'ondulation est limité par un paramétrage de la machine avant les opérations de découpage, mais dans la mesure où d'autres paramètres mal identifiés interviennent, comme l'usure de la machine ou des défauts de ses composants, des variations d'ondulation et d'amplitudes des ondulations non maîtrisées surviennent durant la découpe.

Le document FR2925377 présente un exemple de dispositif de découpe par jet d'eau à haute pression comportant une pluralité de fils tendus à une tension prédéterminée au-dessus d'une plaque à découper. Ces fils interceptent un jet découpant la plaque et préviennent les effets du bouillonnement de l'eau d'une piscine de découpe, ce bouillonnement étant dû à l'impact du jet d'eau dans la piscine.

Il existe donc un problème non résolu à ce jour pour détecter ces variations d'ondulation lorsqu'elles se produisent au-delà d'un certain niveau de tolérance préalablement défini, et ainsi réduire le nombre de pièces défectueuses et donc limiter les pertes par rebut et économiser du temps.

### OBJET DE L'INVENTION

La présente invention vise précisément à offrir une solution à ce problème en permettant un contrôle en temps réel de la découpe de façon à connaître l'ondulation en chaque point de la pièce au fur et à mesure de la découpe.

Ce but est atteint selon la présente invention grâce à une méthode de découpe de matériaux pour la fabrication de pièces, caractérisée en ce qu'une image d'un trait de coupe est réalisée de manière récurrente en aval d'une tête de découpe et en ce que les images ainsi produites sont analysées en temps réel pour calculer des amplitudes de déviations du trait de coupe au fur et à mesure de la découpe de la pièce et comparer lesdites amplitudes calculées à au moins une valeur seuil prédéfinie, ladite découpe étant stoppée en cas de dépassement de ladite au moins une valeur seuil.

La méthode de l'invention est remarquable en ce qu'elle permet de détecter, et de calculer l'amplitude d'une déviation du trait de coupe, au cours de l'avancement de la découpe, par rapport au profil de surface attendu et ainsi de stopper la découpe en cas de dépassement d'au moins une valeur seuil prédéfinie à partir du profil de surface attendu.

La méthode de l'invention est remarquable en ce qu'elle s'applique à toutes techniques de découpe. A titre d'exemples, on peut citer les découpes plasma, laser, par électro-érosion, au jet d'eau additionnée ou non d'abrasifs qui sont choisies en fonction du matériau constituant la pièce et du degré de finition et de précision recherché. L'invention vise tout spécialement une découpe au jet d'eau abrasif ou non. Cette technique est basée principalement sur le contrôle de la pression d'eau additionnée éventuellement d'abrasifs selon la dureté des matériaux. La découpe au jet d'eau présente de nombreux avantages en termes d'efficacité et de qualité des pièces, mais elle présente aussi quelques inconvénients dus au retard de jet et à la dépouille. Ces inconvénients sont gérés dans l'art antérieur lors du réglage de la machine avant ou au cours de son utilisation à partir de paramètres comme l'épaisseur et la dureté des matériaux, l'angle et la vitesse de coupe, la pression d'eau, la concentration d'abrasifs, etc. Toutefois, ces artifices permettent de compenser certaines imperfections, mais si une ondulation trop importante survient elle n'est pas gérée et la pièce produite est défectueuse. La méthode de l'invention offre précisément les moyens de palier à ce problème en contrôlant au fur et à mesure par l'image le bon déroulement de la découpe de façon à adresser un message d'arrêt à la machine si l'ondulation est supérieure au seuil autorisé en fonction de la nature de la pièce.

La découpe au jet d'eau qui s'applique à tous matériaux sauf le verre trempé, s'avère très intéressante dans le domaine de l'aéronautique pour la découpe de pièces même de grandes dimensions en fibres de carbone.

Ainsi parmi les matériaux susceptibles d'être mis en œuvre dans la méthode de l'invention, on peut citer : les matériaux composites thermodur, thermoplasiques, LRI, RTM, entrant dans la fabrication de poutre ventrale et des composants WLC des ailes d'avions.

La méthode de l'invention permet, selon la technique de découpe mise en œuvre, l'état de la machine utilisée, le matériau découpé, et l'application ultérieure de la pièce produite, de retenir un ou plusieurs critères qui seront inspectés sur les images du trait de coupe au fur et à mesure de la découpe. A titre d'exemple de critères de qualité, on connaît les composantes de l'état de surface suivantes par rapport auxquelles peuvent être prédéfinies ladite au moins une valeur seuil de la méthode de l'invention :
- les défauts de forme primaire qui représentent des composantes périodiques de grande longueur d'onde comme l'écart de rectitude, de circularité, dont la dimension dépend de l'échelle de la pièce,
- l'ondulation qui représente des composantes périodiques de longueur d'onde moyenne ; dans ce cas la distance d'irrégularité entre deux sommets est généralement comprise entre 0,5 et 2,5mm environ,
- la rugosité qui représente des composantes périodiques et pseudo-périodiques de longueur d'onde faible ; dans ce cas la distance d'irrégularité entre deux sommets est généralement comprise entre 0,02 et 0,5 mm environ,
- la micro-rugosité qui représente des composantes apériodiques et correspondent à des imperfections de surface, dont la taille est généralement inférieure à 20µm.

Ainsi, les ondulations sont une sous-catégorie de déviations de coupe, d'autres catégories étant des défauts de forme et de rugosité.

Ces composantes du profil de surface constituent autant de critères de qualité qui peuvent être appliqués à un trait de coupe de façon à prédéfinir une ou plusieurs valeurs seuils dont la comparaison avec les caractéristiques calculées à partir des images permettent de stopper la découpe dans le cas de déviations de trop forte amplitude qu'il s'agisse d'ondulations, de défauts de forme primaire, ou encore de rugosité trop importante. Ainsi, on entend par déviation d'un profil de surface, selon la présente invention, non seulement les ondulations proprement dites, mais plus généralement tous les déviations constituant des défauts susceptibles d'affecter le trait de coupe par rapport à une ou plusieurs valeurs seuils prédéfinies.

Il peut donc aussi s'agir d'autres composantes non désirées du trait de coupe par rapport auxquelles peuvent être prédéfinies ladite au moins une valeur seuil de la méthode de l'invention, comme une coupe non perforante, une coupe qui n'aurait pas ou mal traversé le matériau, une coupe trop large ou au contraire trop fine. Les dimensions de ces autres composantes sont fonction de la taille des pièces qui sont fabriquées.

L'analyse des images produites comprend généralement la mise en valeur des contours du trait de coupe, la détection des contours, la détermination de la ligne de forme directrice, comme une droite ou un polynôme, connue grâce à la trajectoire de découpe prévue, puis la détermination des variations autour de cette ligne de forme basée sur leur longueur d'onde.

Le trait de coupe est filmé ou photographié en aval de la tête de coupe sur une longueur qui varie selon la technique de découpe utilisée, la vitesse de coupe et le matériau découpé, mais généralement chaque image produite couvre une longueur du trait de coupe qui, selon l'ouverture et le champ couvert par la caméra, peut-être de quelques mm à plusieurs cm.

De même, selon le dispositif de prises de vues utilisé et la distance à laquelle ce dernier est placé, il est possible d'atteindre des résolutions de l'ordre de 0,01 mm qui sont largement suffisantes pour détecter les variations non désirées du trait de coupe.

Ces critères ainsi que les besoins et contraintes liés aux matériaux et au système de découpe permettent de sélectionner l'objectif de la caméra et donc la distance entre la caméra et le trait de coupe.

La méthode de l'invention peut être mise en œuvre en filmant ou photographiant l'avance du trait de coupe ; la différence réside dans la vitesse de prise de vues et le traitement des images prises. Les images peuvent donc être prises à des intervalles de temps qui varient en fonction de la vitesse de découpe et le champ ou la longueur du trait de coupe couvert par les images. Les caméras offrent beaucoup de possibilités en cette matière et les intervalles peuvent être compris entre 0,01 et 10 secondes.

Le trait de coupe est filmé ou photographié par le dessus et/ou le dessous du matériau découpé. On préfère généralement que les images représentent le dessous du trait de coupe, mais dans le suivi de certains critères particuliers, comme la conicité du trait de coupe, il peut être utile d'analyser des images du dessus et du dessous du trait de coupe.

La méthode de l'invention peut comprendre la mise en œuvre de moyen d'éclairage ou d'augmentation du contraste des images produites, comme par exemple un éclairage de type annulaire fixé autour de l'objectif de la caméra.

Dans une certaine forme de mise œuvre de la méthode de l'invention, il peut être utile de protéger la caméra de projections, par exemple d'eau dans le cas d'une découpe au jet d'eau. Un système de ventilation à jet d'air, une balayette-raclette type essuie-glace peut être utilisée pour garantir la qualité des prises de vue.

Comme indiqué précédemment, la méthode de l'invention s'applique tout particulièrement à la fabrication de pièces en matériaux composites pour l'aéronautique, comme celles entrant dans la constitution du fuselage ou des ailes d'avions.

L'invention concerne aussi un dispositif pour la mise en œuvre de la méthode décrite précédemment. Il s'agit d'un dispositif comprenant une machine de découpe de pièces, une caméra disposée en aval de la tête de découpe dans le sens d'avancement du trait de coupe, un système d'analyse des images prises avec la caméra, ledit système d'analyse étant relié au système de contrôle de la machine de découpe de façon à permettre son arrêt instantané.

Selon une forme préférée de réalisation du dispositif de l'invention, la caméra est disposée de façon à prendre des images du dessous du trait de coupe. Ainsi, dans le cas de la mise en œuvre d'une machine de découpe au jet d'eau, la caméra est fixée au collecteur de la tête de découpe et les images sont prises du côté où l'eau du jet s'évacue.

Afin d'augmenter si nécessaire la qualité des images produites, le dispositif de l'invention peut être muni :
- de moyen d'éclairage ou d'augmentation du contraste des images produites,
- de moyen de protection contre les projections, par exemple d'eau dans le cas d'une découpe au jet d'eau.

### DESCRIPTIONS DES FIGURES

D'autres avantages et caractéristiques de l'invention ressortiront de la description d'exemples qui suivent donnés à titre non limitatif d'un mode de réalisation particulier d'une méthode selon l'invention et d'un dispositif pour sa mise en œuvre, dans lesquels :
- la figure 1 représente un dispositif objet de la présente l'invention où la caméra est fixée au collecteur de la tête de découpe au jet d'eau,
- les figures 2 à 4 représentent schématiquement le processus d'un exemple de mise en œuvre de la méthode objet de la présente invention appliquée aux lignes de découpe d'une pièce,
- plus particulièrement, la figure 3 représente sur des photos la ligne de coupe visualisée par la caméra du dispositif et la détermination de la ligne directrice associée,
- plus particulièrement, les figures 4 et 5 représentent l'analyse du profil de surface de portions du bord de coupe donnée à la figure 3.

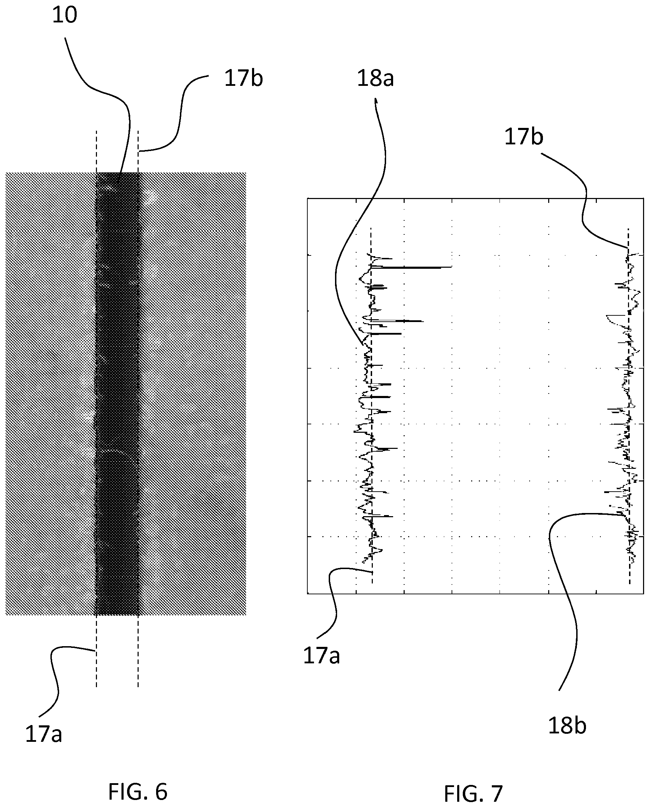

- la figure 6 représente un trait de coupe et la détermination des lignes directrices associées.

### DESCRIPTION D'EXEMPLES DE RÉALISATION DE L'INVENTION

L'invention est décrite de manière détaillée dans le cas de la découpe au jet d'eau d'une pièce en matériau composite 1. La méthode serait également applicable, avec des moyens adaptés, pour toute découpe d'un matériau par une méthode qui serait susceptible de générer des ondulations ou des déviations non contrôlées du trait de coupe.

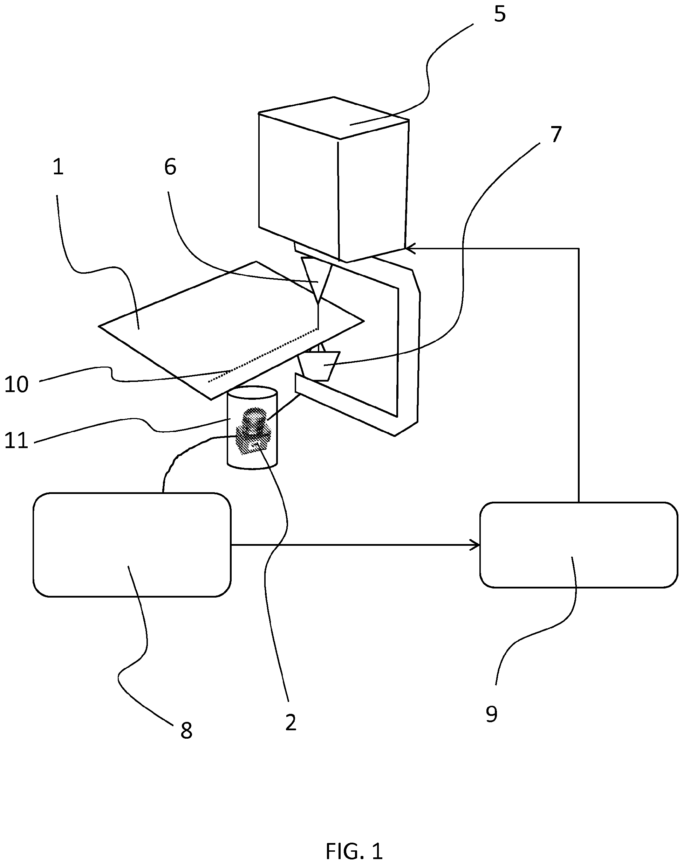

La figure 1 donne un exemple de dispositif de l'invention.

De manière connue dans une machine de découpe, une pièce en matériau composite 1 est disposée sur un support, non représenté sur la figure 1, de la machine de découpe au jet d'eau 5, la tête de découpe 6 est au-dessus du matériau 1 et un collecteur 7 au-dessous dudit matériau 1.

Une caméra 2 est fixée en dessous du matériau composite 1 à proximité du collecteur 7 de sorte à réaliser à intervalles de temps rapprochés des images du trait de coupe 10. Par intervalle de temps rapproché, il doit être compris que les images successives doivent permettre de représenter le trait de coupe 10 sans interruption sur toute sa longueur surveillée et d'assurer un traitement desdites images pour détecter les déviations dont l'amplitude est supérieure au seuil défini dans un temps cohérent avec la vitesse de divergence des déviations possibles.

La caméra 2 est protégée par une pièce 11.

Les images prises par la caméra 2 sont traitées au fur et à mesure de leur acquisition, autant que possible en temps réel dans le sens où le traitement est effectué sans autre retard que les temps d'acquisition et de traitements numériques des images, par un système de traitement et d'analyse 8 configuré pour identifier, par une analyse des images, le trait de coupe 10, le trait de coupe 10 correspondant au bord de la pièce 1, pour calculer l'amplitude des déviations de la qualité du profil de surface et comparer ladite déviation à une valeur seuil.

La caméra 2 est maintenue par le support de manière à être fixe dans un référentiel de la tête de découpe 6 et à observer la coupe à une distance constante du jet réalisant ladite coupe. Dans une forme de réalisation, la pièce 1 est maintenue immobile pendant les opérations de découpe et la caméra 2 est montée mobile avec la tête de découpe 6 qui suit la trajectoire théorique par rapport à la pièce. Dans une forme de réalisation, la pièce 1 est mobile et la tête de découpe est fixe, la caméra 2 étant alors également fixe. Dans une forme de réalisation la tête de découpe est mobile suivant au moins un axe de déplacement et la pièce est mobile suivant au moins un autre axe de déplacement, et dans ce cas la caméra 2 est mobile avec la tête de découpe.

Dans une forme de réalisation, la caméra 2 comporte un degré de déplacement par rapport à la tête de découpe pour visualiser une zone de la pièce qui n'est pas dans la direction du déplacement. Cette possibilité de modifier la position et ou l'orientation de la caméra par rapport à la tête de découpe est avantageuse pour maintenir le trait de coupe dans le champ de la caméra lorsque la ligne théorique détermine une trajectoire de la coupe avec de faibles rayons de courbure en considération de la zone observée par la caméra et en particulier de la distance de cette zone à l'emplacement du jet de découpe. Dans une telle configuration, la rotation relative de la pièce par rapport à l'ensemble tête de découpe/caméra est susceptible de faire sortir du champ de l'image caméra le trait de coupe.

Un déplacement de la caméra 2 géré par le système de contrôle 9 permet de compenser l'effet de cette rotation pour maintenir le trait de coupe dans le champ de la caméra.

Dans une autre forme de réalisation, le système de traitement 8 qui analyse les images restitue une position du trait de coupe dans l'image et commande un déplacement de la caméra 2 pour maintenir ledit de trait de coupe sensiblement au centre de l'image.

Le système de traitement 8 est relié à un système de contrôle 9 de la machine de découpe 5 de façon à arrêter la découpe si l'amplitude des déviations dépasse la valeur seuil.

La caméra 2 est avantageusement une caméra numérique, par exemple à capteur d'image Cmos ou à capteur d'image CCD, suffisamment durcie pour fonctionner durablement dans l'environnement de la machine de découpe mise en œuvre.

La caméra 2 comporte des moyens de communication, filaires ou sans fils, pour transmettre les images acquises par ladite caméra au système de traitement 8.

Une résolution des images délivrées par la caméra sera choisie, en fonction de caractéristiques d'une optique associée aux capteurs d'image pour garantir la détection d'une déviation minimale devant être détectée, typiquement une résolution au moins deux fois supérieure à la plus petite déviation à détecter.

Il doit être noté que dans le cas décrit d'une découpe au jet d'eau, la coupe forme un évidement de l'ordre du millimètre et que la tolérance sur l'amplitude des ondulations et déviations est de l'ordre du dixième de millimètre.

Dans un exemple de réalisation, la caméra 2 est choisie avec un capteur 1/2 pouce et une résolution image de 10 mégapixels et délivrant au moins 5 images par seconde, pourvue d'un objectif de préférence de focale suffisante, par exemple 50 mm correspondant à un « petit » téléobjectif pour la taille de capteur considérée, pour réaliser les images depuis une distance assurant la sécurité physique de la caméra et avec un grandissement suffisant.

La caméra 2 est par exemple une camera Gigabit Ethernet industrielle Couleur 10 mégapixels de la Société Bayer commercialisée sous la référence IDS UI-5490SE-C-HQ associée à une optique CVO de focale 50 mm, soit 8,7° d'ouverture suivant une diagonale de l'image délivrée par la caméra, référencée GM10HR35028MCN.

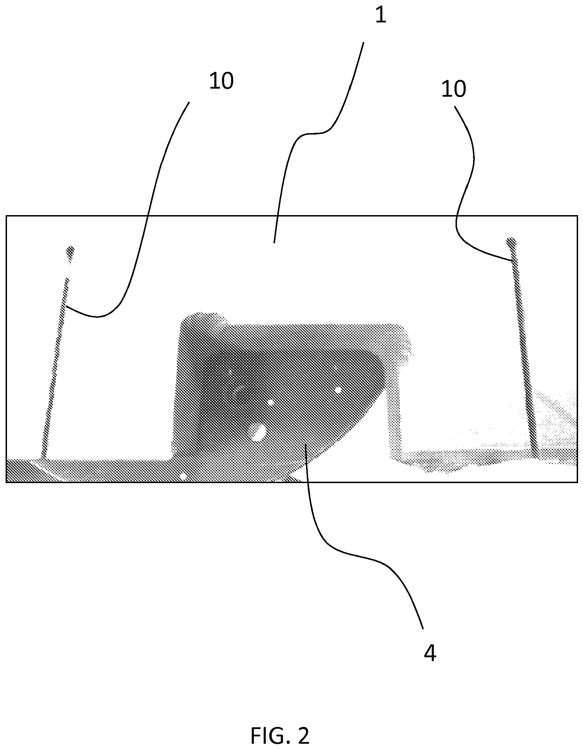

Les figures 2 à 4 représentent schématiquement les étapes d'un exemple de mise en œuvre de la méthode de l'invention.

La figure 2 montre deux traits de coupe 10 de la double découpe au jet d'eau du matériau composite 1 disposé sur un support 4.

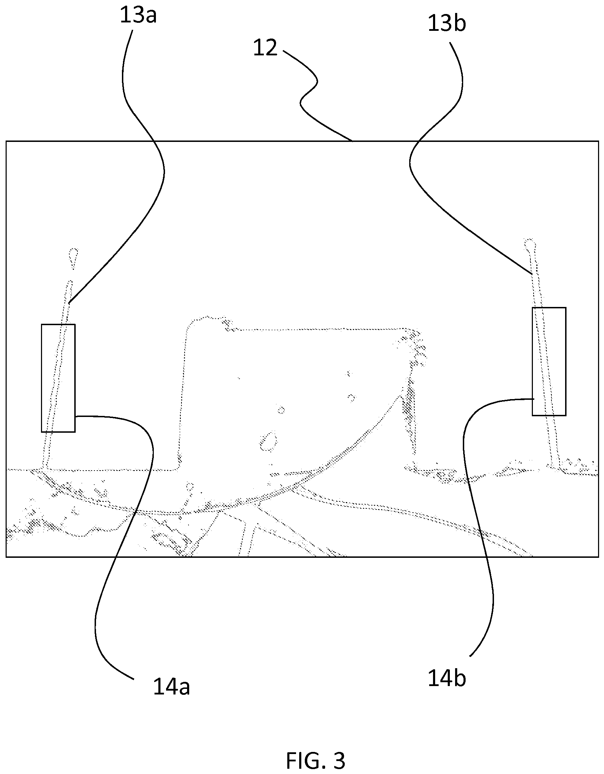

La figure 3 représente l'image 12 prise par la caméra et traitée par le système d'analyse pour déterminer un couple 13a et 13b des bords des coupes des traits de coupe 10 de la figure 2.

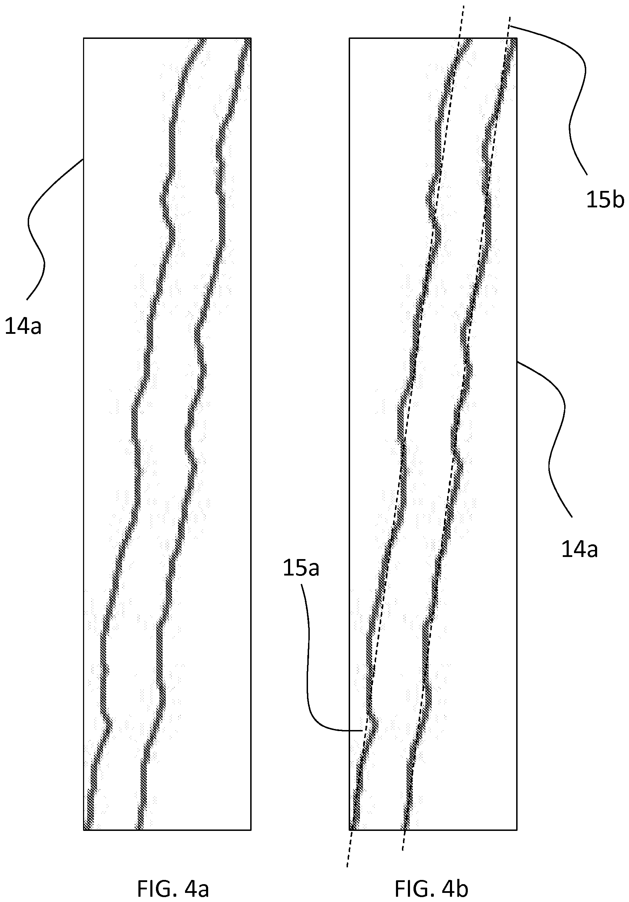

Les figures 4a et 4b représentent l'analyse du profil de surface de la portion 14a donnée à la figure 3 du bord de coupe 13a. Sur la figure 4b sont indiquées en pointillés les lignes 15a et 15b correspondant aux bords de la pièce pour détecter la déviation éventuelle de la qualité du profil de surface. Lorsque la déviation atteint une valeur supérieure à un seuil donné, une alarme est déclenchée et/ou l'arrêt de la découpe est provoqué.

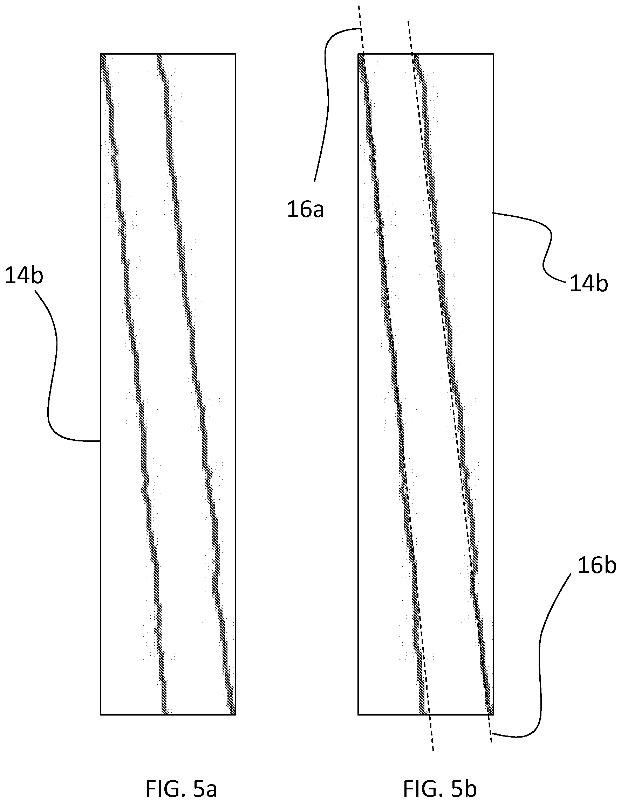

Les figures 5a et 5b représentent l'analyse du profil de surface de la portion 14b donnée à la figure 3 du bord de coupe 13b. Sur la figure 5b sont indiquées en pointillés les lignes 16a et 16b correspondant aux bords de la pièce pour détecter la déviation éventuelle de la qualité du profil de surface. Lorsque la déviation atteint une valeur supérieure à un seuil donné, une alarme est déclenchée et/ou l'arrêt de la découpe est provoqué.

On comprend des figures 4a, 4b, 5 a et 5b que le trait de coupe 10 n'est pas l'axe de la zone dans laquelle la matière a été retirée par la coupe mais plus précisément un bord de cette zone, en particulier le bord correspondant à la pièce 1 découpée. Le cas échéant, lorsque ladite zone est suffisamment étroite en comparaison des amplitudes des déviations et ondulations devant être détectées, l'axe de cette zone peut être confondu avec le bord de la pièce.

Suivant le procédé, l'image du trait de coupe est de préférence acquise au plus tôt, c'est-à-dire en pratique au plus près de l'emplacement où est réalisée la coupe du matériau. Dans l'exemple de la découpe au jet d'eau, les images doivent être prises au plus près de l'emplacement où le jet d'eau traverse la pièce découpée.

L'emplacement au plus près dépend des caractéristiques du dispositif qui réalise la découpe. D'une part la caméra doit se trouver dans des conditions où elle est suffisamment protégée pour délivrer des images exploitables. Le cas échéant, la caméra, surtout son objectif, est protégé par un écran ou un filtre dont la transparence est garantie par un système d'essuyage, non représenté, par exemple le balayage continu d'une raclette en élastomère. D'autre part, la caméra doit être placée en un emplacement et sous un angle où le trait de coupe est effectivement visible et ne risque pas d'être masqué, par exemple par un brouillard produit par le jet d'eau réalisant la découpe ou par un élément accessoire du système de découpe.

Compte tenu de la distance, résultant de ces conditions, entre l'emplacement où est réalisée la découpe effective du matériau et l'emplacement sur la pièce où est effectivement acquise l'image du trait de coupe, les amplitudes des déviations et ondulations du trait de coupe, déterminées par le dispositif mettant en œuvre le procédé, sont déterminées avec un retard, dépendant de la vitesse de découpe, par rapport au moment où elles sont formées.

Pour prendre en compte ce retard, les valeurs de seuils des déviations mesurées pour lesquelles une alarme est générée et/ou la découpe est interrompue sont inférieures aux valeurs maximales tolérées pour prendre en compte une divergence des amplitudes des déviations pendant la découpe. Au plus ces seuils correspondent aux tolérances, diminuées des incertitudes de mesure, dans les cas où il est établi ou admis que la divergence est très lente.

Dans une forme de mise en œuvre, le procédé comporte une étape initiale de caractérisation du dispositif de découpe pour déterminer un coefficient de divergence des déviations, par exemple par la réalisation de découpes sur des éprouvettes ou par des abaques établies préalablement pouvant par exemple utiliser le nombre d'heures total de fonctionnement de la machine réalisant la découpe, lequel coefficient détermine les seuils devant être utilisés. Cette étape initiale est par exemple réalisée de manière périodique, par exemple avant chaque découpe d'une série de pièces ou à intervalle de nombre d'heures de fonctionnement donné, pour prendre en compte le vieillissement et l'usure de la machine réalisant la découpe.

Avantageusement des conditions, en particulier d'éclairement et de sensibilité spectrale de la caméra, seront entretenues pour obtenir du trait de coupe une image contrastée qui est soumise à un algorithme de traitement d'image pour identifier la géométrie du trait de coupe. Les algorithmes de traitement d'images procédant aux extractions de contours, aux reconnaissances de formes et aux calculs de dimensions sont connus et seront mis en œuvre par l'homme du métier pour déterminer les déviations du trait de coupe par rapport à une ligne théorique.

Il doit être noté que dans un cas général, le trait de coupe n'est pas nécessairement rectiligne, au moins sur toute sa longueur. La ligne théorique prise en considération pour déterminer les amplitudes des déviations du trait de coupe est donc celle qui correspond au contour spécifié pour la pièce et qui, dans le procédé, est connue du dispositif puisqu'elle détermine la trajectoire relative que doit suivre une tête de découpe 6 par rapport à la pièce.

La figure 6 montre un trait de coupe 10 et la détermination des lignes directrices associées représentées par les lignes en pointillés 17a et 17b. La figure 7 donne une représentation graphique des profils de surfaces 18a et 18b de chacun des bords du trait de coupe 10.

## Revendications

1. Méthode de découpe de matériaux pour la fabrication de pièces, **caractérisée en ce qu'**une image d'un trait de coupe est réalisée de manière récurrente en aval d'une tête de découpe et **en ce que** les images ainsi produites sont analysées en temps réel pour calculer des amplitudes de déviations du trait de coupe au fur et à mesure de la découpe de la pièce et comparer lesdites amplitudes calculées à au moins une valeur seuil prédéfinie, ladite découpe étant stoppée en cas de dépassement de ladite au moins une valeur seuil.

2. Une méthode selon la revendication 1, **caractérisée en ce que** la découpe est réalisée par une technique au jet d'eau additionnée ou non d'abrasifs.

3. Une méthode selon l'une des revendications 1 ou 2, **caractérisée en ce que** la pièce est constituée d'un matériau composite.

4. Une méthode selon l'une quelconque des revendications 1 à 3, **caractérisée en ce que** ladite au moins une valeur seuil est prédéfinie par rapport à l'une au moins des composantes de l'état de surface suivantes :
- les défauts de forme primaire qui représentent des composantes périodiques de grande longueur d'onde,
- l'ondulation qui représente des composantes périodiques de longueur d'onde moyenne,
- la rugosité qui représente des composantes périodiques et pseudo-périodiques de longueur d'onde faible,
- la micro-rugosité qui représente des composantes apériodiques et correspondent à des imperfections de surface.

5. Une méthode selon l'une quelconque des revendications 1 à 4, **caractérisée en ce que** ladite au moins une valeur seuil est prédéfinie par rapport à l'une au moins des composantes suivantes d'un trait de coupe :
- une coupe non perforante,
- une coupe trop large,
- une coupe trop fine.

6. Une méthode selon l'une quelconque des revendications précédentes, **caractérisée en ce que** l'analyse des images produites comprend la mise en valeur des contours du trait de coupe, la détection des contours, la détermination de la ligne de forme directrice connue grâce à la trajectoire de découpe prévue, la détermination des variations autour de cette ligne de forme basée sur leur longueur d'onde.

7. Une méthode selon l'une quelconque des revendications précédentes, **caractérisée en ce que** les images sont prises à des intervalles de temps compris entre 0,01s et 10s.

8. Une méthode selon l'une quelconque des revendications précédentes, **caractérisée en ce que** le trait de coupe est filmé ou photographié par le dessous.

9. Application de la méthode selon l'une quelconque des revendications précédentes à la fabrication de pièces en matériaux composites entrant dans la constitution du fuselage ou des ailes d'avions.

10. Dispositif pour la mise en œuvre de la méthode selon l'une quelconque des revendications précédentes , **caractérisé en ce qu'**il comprend une machine de découpe (5), une caméra (2) disposée en aval de la tête de découpe (6) dans le sens d'avancement du trait de coupe (10), un système d'analyse (8) des images (12) prises avec la caméra (2), ledit système d'analyse (8) étant relié au système de contrôle (9) de la machine de découpe (5) de façon à permettre son arrêt instantané.

11. Dispositif selon la revendication 10, **caractérisé en ce que** la caméra (2) est disposée de façon à prendre des images (12) du dessous du trait de coupe (10).

12. Dispositif selon l'une quelconque des revendications 10 à 11, **caractérisé en ce qu'**il est muni :
- de moyen d'éclairage ou d'augmentation du contraste des images produites, et/ou
- de moyen de protection (11) de la caméra (2).

## Patentansprüche

1. Verfahren zum Schneiden von Materialien zur Fertigung von Bauteilen, **dadurch gekennzeichnet, dass** ein Bild einer Schnittspur wiederholt hinter einem Schneidkopf hergestellt wird, und dass die so erzeugten Bilder in Echtzeit analysiert werden, um Amplituden von Abweichungen der Schnittspur während des Schneidens des Bauteils zu berechnen und die berechneten Amplituden mit mindestens einem vordefinierten Schwellwert zu vergleichen, wobei der Schnitt im Fall einer Überschreitung des mindestens einen Schwellwerts gestoppt wird.

2. Verfahren nach Anspruch 1, **dadurch gekennzeichnet, dass** der Schnitt durch eine Technik mit Wasserstrahl durchgeführt wird, dem Schleifmittel hinzugefügt wurden oder nicht.

3. Verfahren nach einem der Ansprüche 1 oder 2, **dadurch gekennzeichnet, dass** das Bauteil aus einem Verbundmaterial besteht.

4. Verfahren nach einem der Ansprüche 1 bis 3, **dadurch gekennzeichnet, dass** der mindestens eine Schwellwert bezüglich mindestens einer der folgenden Komponenten des Oberflächenzustands vordefiniert wird:
- die Primärformfehler, die periodische Komponenten großer Wellenlänge darstellen,
- die Welligkeit, die periodische Komponenten mittlerer Wellenlänge darstellt,
- die Rauigkeit, die periodische und pseudoperiodische Komponenten geringer Wellenlänge darstellt,
- die Mikro-Rauigkeit, die aperiodische und Oberflächenfehlern entsprechende Komponenten darstellt.

5. Verfahren nach einem der Ansprüche 1 bis 4, **dadurch gekennzeichnet, dass** der mindestens eine Schwellwert bezüglich mindestens einer der folgenden Komponenten einer Schnittspur vordefiniert wird:
- ein nicht durchdringender Schnitt,
- ein zu breiter Schnitt,
- ein zu dünner Schnitt.

6. Verfahren nach einem der vorhergehenden Ansprüche, **dadurch gekennzeichnet, dass** die Analyse der erzeugten Bilder die Auswertung der Umrisse der Schnittspur, die Erfassung der Umrisse, die Bestimmung der aufgrund der vorgesehenen Schnittstrecke bekannten Leitformlinie, die Bestimmung der Änderungen um diese Formlinie herum basierend auf ihrer Wellenlänge enthält.

7. Verfahren nach einem der vorhergehenden Ansprüche, **dadurch gekennzeichnet, dass** die Bilder in Zeitabständen zwischen 0,01 s und 10 s aufgenommen werden.

8. Verfahren nach einem der vorhergehenden Ansprüche, **dadurch gekennzeichnet, dass** die Schnittspur von unten gefilmt oder fotografiert wird.

9. Anwendung des Verfahrens nach einem der vorhergehenden Ansprüche auf die Herstellung von Bauteilen aus Verbundmaterialien, die zum Aufbau des Rumpfs oder der Flügel von Flugzeugen gehören.

10. Vorrichtung zur Durchführung des Verfahrens nach einem der vorhergehenden Ansprüche, **dadurch gekennzeichnet, dass** sie eine Schneidmaschine (5), eine Kamera (2), die hinter dem Schneidkopf (6) in Vorschubrichtung der Schnittspur (10) angeordnet ist, ein Analysesystem (8) der mit der Kamera (2) aufgenommenen Bilder (12) enthält, wobei das Analysesystem (8) mit dem Steuersystem (9) der Schneidmaschine (5) verbunden ist, um ihr augenblickliches Anhalten zu ermöglichen.

11. Vorrichtung nach Anspruch 10, **dadurch gekennzeichnet, dass** die Kamera (2) so angeordnet ist, dass sie Bilder (12) der Unterseite der Schnittspur (10) aufnimmt.

12. Vorrichtung nach einem der Ansprüche 10 bis 11, **dadurch gekennzeichnet, dass** sie ausgestattet ist mit:
- Einrichtungen zur Beleuchtung oder zur Erhöhung des Kontrasts der erzeugten Bilder, und/oder
- Schutzeinrichtungen (11) der Kamera (2).

## Claims

1. Method for cutting materials for the manufacture of parts, **characterized in that** an image of a cutting line is captured in a recurrent manner downstream of a cutting head and **in that** the images thus produced are analyzed in real time in order to calculate amplitudes of deviations of the cutting line as the cutting of the part progresses and to compare said amplitudes calculated with at least one predefined threshold value, said cutting being stopped in the case of exceeding said at least one threshold value.

2. Method according to Claim 1, **characterized in that** the cutting is carried out by a water-jet technique with the addition, or otherwise, of abrasives.

3. Method according to either of Claims 1 and 2, **characterized in that** the part is made of a composite material.

4. Method according to any one of Claims 1 to 3, **characterized in that** said at least one threshold value is predefined with respect to the at least one of the following components of the surface state:
- the primary shape defects which represent periodic components of long wavelength,
- the waviness which represents periodic components of average wavelength,
- the roughness which represents periodic and pseudo-periodic components of short wavelength,
- the micro-roughness which represents aperiodic components and corresponds to surface imperfections.

5. Method according to any one of Claims 1 to 4, **characterized in that** said at least one threshold value is predefined with respect to the at least one of the following components of a cutting line:
- a non-penetrating cut,
- too wide a cut,
- too narrow a cut.

6. Method according to any one of the preceding claims, **characterized in that** the analysis of the images produced comprises the highlighting of the contours of the cutting line, the detection of the contours, the determination of the shape guideline known by virtue of the planned cutting path, the determination of the variations around this shape line based on their wavelength.

7. Method according to any one of the preceding claims, **characterized in that** the images are captured at intervals of time in the range between 0.01 s and 10 s.

8. Method according to any one of the preceding claims, **characterized in that** the cutting line is filmed or photographed from the underside.

9. Application of the method according to any one of the preceding claims to the manufacture of parts made of composite materials involved in the composition of the fuselage or of the wings of aircraft.

10. Device for the implementation of the method according to any one of the preceding claims, **characterized in that** it comprises a cutting machine (5), a camera (2) disposed downstream of the cutting head (6) in the direction of progression of the cutting line (10), a system (8) for analyzing the images (12) captured with the camera (2), said analysis system (8) being connected to the control system (9) of the cutting machine (5) in such a manner as to allow its instantaneous shutdown.

11. Device according to Claim 10, **characterized in that** the camera (2) is disposed in such a manner as to capture images (12) from the underside of the cutting line (10).

12. Device according to either one of Claims 10 and 11, **characterized in that** it is equipped with:
- means of illumination or of enhancing the contrast of the images produced, and/or
- means of protection (11) for the camera (2).
